## Europäisches Patentamt

## European Patent Office

## Office européen des brevets

(11) Publication number: **0 186 204**
**B1**

(12) **EUROPEAN PATENT SPECIFICATION**

(45) Date of publication of patent specification: **28.11.90**

(51) Int. Cl.⁵: **H 01 M 10/42, H 01 M 10/36**

(21) Application number: **85116588.6**

(22) Date of filing: **27.12.85**

(54) Zinc-bromine battery.

(30) Priority: **27.12.84 JP 278637/84**

(43) Date of publication of application:
**02.07.86 Bulletin 86/27**

(45) Publication of the grant of the patent:
**28.11.90 Bulletin 90/48**

(84) Designated Contracting States:
**AT DE FR IT SE**

(56) References cited:
**FR-A-2 347 787**
**US-A-4 418 128**

(73) Proprietor: **TOYOTA JIDOSHA KABUSHIKI KAISHA**
**1, Toyota-cho Toyota-shi**
**Aichi-ken 471 (JP)**

(72) Inventor: **Sasaki, Torahiko**
**1321, Mishuku**
**Susono-shi Shizuoka (JP)**
Inventor: **Tange, Kyoichi**
**c/o Daini-Higashifuji-ryo 375-1, Imazato**
**Susono-shi Shizuoka (JP)**
Inventor: **Ohkawa, Masahiro**
**35-4, Akaike, Yahagi-cho**
**Okazaki-shi Aichi (JP)**
Inventor: **Suzuki, Yoshihiro**
**1321, Mishuku**
**Susono-shi Shizuoka (JP)**

(74) Representative: **Struif, Bernward, Dipl.-Chem. Dr. et al**
**Patentanwaltsbüro Tiedtke, Bühling, Kinne Grupe, Pellmann, Grams, Struif Bavariaring 4**
**D-8000 München 2 (DE)**

Courier Press, Leamington Spa, England.

**EP 0 186 204 B1**

**Description**

This invention relates to a zinc-bromine battery, and more particularly, to improvements of an electrolyte circulation type zinc-bromine battery having electrolyte storage tanks.

A zinc-bromine battery is known as a new type of battery. The following fundamental electrochemical reactions take place in a reaction tank provided with an anode and a cathode of a zinc- bromine battery.

The reaction at the cathode is:

$$2Br^- \leftrightarrows Br_2 + 2e^-$$

The reaction at the anode is:

$$Zn^{2+} + 2e^- \leftrightarrows Zn \qquad\qquad (1)$$

The cell reaction is:

$$Zn^{2+} + 2Br^- \cdot \xrightarrow[\text{discharge}]{\text{charge}} Zn + Br_2$$

As is clear from the reaction formulae, zinc Zn is deposited during charge and bromine $Br_2$ which dissolves into the electrolyte is produced at the cathode. On the other hand, during discharge the zinc Zn deposited onto the anode is oxidized to $Zn^{2+}$ and dissolves into the electrolyte, while the bromine $Br_2$ in the electrolyte is reduced to bromine ion $2Br^-$ and dissolves into the electrolyte.

In such a zinc-bromine battery, the concentration of the bromine $Br_2$ in the electrolyte which is produced during charge increases as the charging time passes, and the bromine $Br_2$ gradually diffuses toward the anode. The bromine $Br_2$ reacts with the zinc Zn at the anode, and becomes zinc ion $Zn^{2+}$ and bromine ion $Br^-$, thereby occurring self-discharge. The zinc-bromine battery is therefore provided with a separator membrane which zinc ion $Zn^{2+}$ and bromine ion $Br^-$ can permeat but which impedes the permeation of bromine $Br_2$ in order to separate the reaction tank into anode and cathode reaction tanks, thereby preventing bromine $Br_2$ from diffusing from the cathode side to the anode side.

Furthermore, in order to prevent diffusion of the bromine $Br_2$, a complexing agent is added to the electrolyte of the zinc-bromine battery, so that the bromine $Br_2$ dissolved into the electrolyte on the cathode side is converted into a complex compound which is insoluble in the electrolyte, and is deposited and precipitated in the form of oil in the electrolyte.

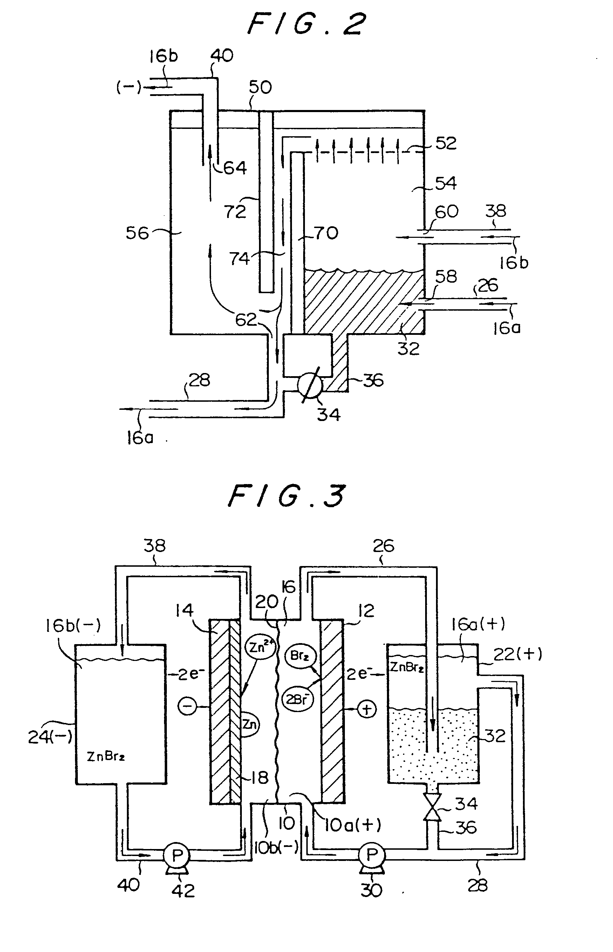

Figure 3 shows a conventional zinc-bromine battery produced on the basis of the above-described principle. In this battery, a cathode (12) and an anode (14) are provided within a reaction tank (10), one on each side thereof, whereby the electrochemical reactions indicated by the formulae (1) take place between the cathode (12) and anode (14) through electrolytes (16).

In such a zinc-bromine battery, zinc-bromide ($ZnBr_2$) aqueous solution is used as the electrolyte (16), and an electric conductance improver, a bromine complexing agent, a dendrite inhibiter and the like are added thereto as occasion demands.

During charge, the charging reaction shown in the formulae (1) takes place in the reaction tank (10), and bromine $Br_2$ is generated on the cathode side (12) and dissolves into the electrolyte (16), while on the anode side (14) zinc Zn is deposited and a precipitation chamber (18) is formed on the anode (14).

On the other hand, the reaction which is reverse to the charging reaction takes place during discharge. Bromine $Br_2$ is reduced to bromine ion $2Br^-$ on the cathode side (12) and dissolves into the electrolyte (16), while on the anode side (14) the zinc precipitation chamber (18) is oxidized to zinc ion $Zn^{2+}$, and dissolves into the electrolyte (16).

The reaction tank (10) in which these electrochemical reactions take place is provided with a separator membrane (20) which divides the interior of the tank into a cathode reaction tank (10a) and an anode reaction tank (10b) so as to prevent any occurrence of self-discharge caused by the bromine $Br_2$ which is produced during charge.

The separator membrane allows the electrolyte (16) to permeate therethrough but impedes the permeation of the bromine $Br_2$ which is in solution in the electrolyte (16), so as to prevent any occurrence of self-discharge. An ion-exchange membrane or a microporous membrane is generally used as the separator membrane (20), but a microporous membrane is more preferably from the viewpoint of reducing the inner resistance of the battery.

In an electrolyte circulation type battery, an cathode electrolyte storage tank (22) and an anode electrolyte storage tank (24) are provided in order to store the energy obtained by the electrolysis reaction during charge.

Pipes (26) and (28) provided between the cathode electrolyte storage tank (22) and the cathode reaction tank (10a) constitute an electrolyte circulation passage, and a pump (30) provided in the circulation passage delivers the cathode electrolyte (16a) which has reacted in the cathode reaction tank (10a) to the storage tank (22), and supplies new electrolyte (16a) from the storage tank (22) to the reaction tank (10a).

Since a bromine complexing agent is added to the electrolyte (16a), the bromine $Br_2$ generated during the charge is complexed, and is deposited as a complex compound which is insoluble in the electrolyte (16). This complex compound is subsequently precipitated and stored at the bottom of the storage tank (22) as a complex compound storing chamber (32), as is shown in the battery of Figure 3.

The complex compound storing chamber (32) is connected to the pipe (28) by a complex compound

2

supply pipe (36) having a valve (34). This valve (34) delivers the complex compound which has precipitated in the complex compound storing chamber (32) to the reaction tank (10a) through the pipe (28) for the purpose of discharge.

Similarly, pipes (38) and (40) provided between the anolyte storage tank (24) and the anode reaction tank (10b) constitute an electrolyte circulation passage, and a pump (42) provided in the circulation passage delivers the anolyte (16b) which has reacted in the anode reaction tank (10b) to the storage tank (24), and supplies new electrolyte (16b) from the storage tank (24) to the reaction tank (10b).

In this way, this zinc-bromine battery can adequately store the electrolyte (16) in the storage tanks (22) and (24), cause the charging reaction shown in the formulae (1) in the stored electrolyte (16) during charge, store the bromine complex compound in the complex compound storing chamber (32), and form the zinc precipitation chamber (18) on the anode (14), thereby storing electric power. During discharge, on the other hand, the zinc-bromine battery can deliver the bromine complex compound stored in the complex compound storing chamber (32) to the cathode reaction tank (10a), and cause the discharge reaction shown in the formulae (1) between the complex compound and the zinc precipitation chamber (18) formed on the anode (14), thereby emitting the charged electric power.

Although a conventional zinc-bromine battery is capable of efficient charging and discharging in this way, it has the following problems which remain unsolved.

This kind of conventional zinc-bromine battery is completely divided into the cathode side and the anode side, and the catholyte (16a) and the anolyte (16b) are mixed with each other solely by permeation through the separator membrane (20). Since the separator membrane (20) has a predetermined resistance when the electrolyte (16) permeates it, it is impossible to store electric power by efficiently utilizing the zinc ion $Zn^{2+}$ which is contained in the catholyte during charge. It is also impossible to effectively utilize the complexing agent contained in the anolyte (16b) when a bromine complexing agent is contained in the electrolyte (16).

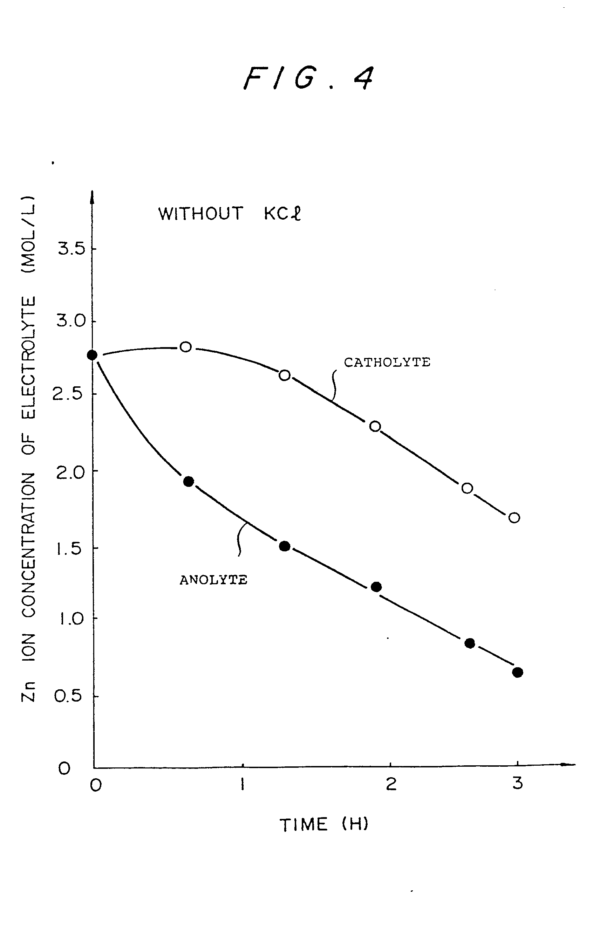

Figure 4 shows the change in zinc ion concentration of the catholyte (16a) and the anolyte (16b) during charge.

As is obvious from the above-described reaction formulae, during charge the zinc ions $Zn^{2+}$ are attracted to the anode (14) and zinc Zn is deposited.

At this time, since the cathode side is separated from the anode side by the separator membrane (20), it is much more difficult for the zinc ions $Zn^{2+}$ in the catholyte (16a) to move toward the anode (14) than the zinc ions in the anolyte (16b). Therefore, since the zinc ions in the anolyte (16b) are consumed sooner than the zinc ions $Zn^{2-}$ in the catholyte (16a) and charging is completed at that point, it is impossible to perform charging by adequately utilizing the zinc ions contained in the catholyte (16a).

In particular, when a salt halogenide such as KCl is added to the electrolyte (16) as an auxiliary electrolyte, or when an electrolyte of high concentration (more than 3 Mol/L $ZnBr_2$) is used in order to improve the electric conductance of the electrolyte (16), the difference in concentration of the electrolytes (16a) and (16b) becomes greater. Consequently, at the last stage of charge, the zinc ions contained in the anolyte (16b) are reduced to an extreme extent in comparison with those of the catholyte (16a), and the utilization ratio of the zinc ions contained in the electrolyte (16) is further lowered.

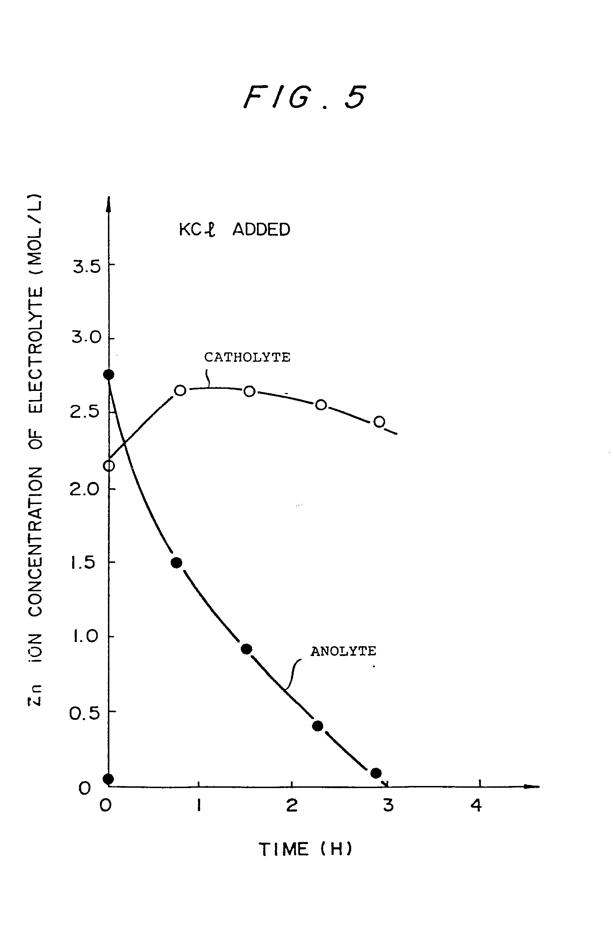

Figure 5 shows the zinc ion concentration when KCl is added to the electrolyte (16). As is clear from the graph, the difference in concentration of the zinc ions contained in the electrolytes (16a) and (16b) is greater in this case than the difference shown in Figure 4, and it will be understood that the utilization ratio of the zinc ions is thereby further lowered.

This is because the KCl added to the electrolyte (16) in this way reacts with the zinc ion $Zn^{2+}$ and becomes $(ZnCl_4)^{2-}$, so that some of the zinc ions which should intrinsically be plus become minus ions and are attracted toward the cathode side, thereby substantially lowering the concentration of the zinc ions contained in the electrolyte (16b).

In addition, the bromine $Br_2$ produced in the catholyte (16a) during charge reacts with the bromine complexing agent and a bromine complex compound is formed. With the increase in amount of bromine complex compound, the concentration of the complexing agent contained in the catholyte (16a) is lowered.

However, the utilization ratio of the bromine complexing agent contained in the anolyte (16b) is low for a similar reason to that in the case of the zinc ions described above, and there has been a demand for effective countermeasures.

FR—A—2 347 787 discloses a zinc-bromine battery comprising a cathode reaction tank and an anode reaction tank, which are separated from each other, and an electrolyte storage tank for storing an electrolyte with a bromine complexing agent added thereto. Between said tanks a catholyte and an anolyte are circulated. Said electrolyte storage tank comprises a separation zone for separating the water insoluble bromine complex from the electrolyte. According to the prior art this battery is provided in two different embodiments.

According to one embodiment which corresponds essentially to the figure 3 illustrated above, the catholyte and anolyte are supplied in separated tanks. From these tanks the catholyte and anolyte are supplied separately to the cathode reaction tank and anode reaction tank, respectively. According to this known embodiment no mixing between said catholyte and anolyte occurs.

According to the other embodiment of FR—A—2 347 787 the separation zone comprises a tank which communicates with the cathode reaction tank and the anode reaction tank by a pipe. Said electrolyte storage tank is divided by a partition wall which is not permeable for the electrolyte. From said divided electrolyte storage tank the electrolyte including said bromine complex compound is supplied to the cathode reaction tank and the anode reaction tank, respectively. In this embodiment the bromine complex compound in the catholyte is also supplied to the anode reaction tank.

It is an object of the present invention to provide a zinc-bromine battery which is capable of reducing the difference in zinc ion concentration as between the catholyte and the anolyte, improving the utilization ratio of the zinc ions contained in the electrolyte, and increasing the charged electric energy.

The present invention comprises a zinc-bromine battery wherein a catholyte (16a) and an anolyte (16b) are circulated between a cathode reaction tank (10a) and an anode reaction tank (10b) which are separated by each other by a separator membrane for preventing self-discharge, and an electrolyte storage tank (50) for storing an electrolyte with a bromine complexing agent added thereto, said electrolyte storage tank (50) including an electrolyte mixing chamber (54), to which said anolyte (16b) and catholyte (16a) flow and an electrolyte supply chamber (56) for resupplying the mixed electrolyte as said anolyte (16b) and said catholyte (16a), characterized in that said electrolyte mixing chamber (54) and said electrolyte supply chamber (56) provided within said electrolyte storage tank (50) are separated by a perforated membrane (52) provided with a multiplicity of minute holes which allows electrolyte to permeate therethrough but which impedes the permeation of bromine complex compound, and in that a complex compound supply pipe (36) is provided between the bottom of said electrolyte mixing chamber (54) which is to constitute a complex compound storage chamber (32) and a passage (62, 28) for said catholyte (16a) which is supplied from said electrolyte supply chamber (56) to said cathode reaction tank (10a), whereby said complex compound is supplied only to said cathode reaction tank (10a).

The above-described structure of a zinc-bromine battery according to the present invention enables the catholyte (16a) and the anolyte (16b) which have finished a predetermined electrochemical reaction in the respective reaction tank (10a, 10b) to be stirred with each other and the stirred electrolytes to be resupplied as the catholyte (16a) and the anolyte (16b) to the respective reaction tanks (10a, 10b).

The bromine generated on the cathode side during charge is complexed by the complexing agent, and this complex compound flows into the electrolyte mixing chamber (54) of the electrolyte storage tank (50) together with the anolyte (16b).

However, the complex compound which has flowed into the electrolyte mixing chamber (54) in this way is separated from the anolyte (16b) in the electrolyte mixing chamber (54) by the perforated membrane (52) provided in the storage tank (50), and is stored in the electrolyte mixing chamber (54) on the upstream side of the perforated membrane (52).

Accordingly, no difference in concentration of zinc ions and bromine complexing agent is seen between the catholyte (16a) and the anolyte (16b) during charge of the zinc-bromine battery according to the present invention.

Therefore, according to the present invention, it is possible to equalize the zinc ion concentration of the anolyte (16b) to that of the catholyte (16a) without increasing the concentration of bromine and its complex compound, and to enhance the charging capacity by efficiently utilizing the zinc ions contained in the electrolytes, thereby improving the charging efficiency.

It is also possible to equalize the concentration of the complexing agent contained in the catholyte with that in the anolyte (16b), and to efficiently utilize the complexing agents contained in the electrolytes during charge to efficiently complex the bromine generated on the cathode side and store it in the complex compound storing layer.

When the electric power charged in this way is discharged, the complex compound stored on the upstream side of the perforated membrane (52) is supplied to the catholyte (16a) through the supply pipe (36) and the electrolyte which is mixed with the bromine complex compound is thereby supplied to the cathode reaction tank (10a). Thus, it is possible to output the electric power from between the cathode and anode which has been charged through a predetermined discharge reaction by using the complex compound supplied to the cathode side in this way and the zinc deposited on the surface of the anode.

The above and other objects, features and advantages of the present invention will become clear from the following description of the preferred embodiments thereof, taken in conjunction with the accompanying drawings.

Figure 1 is an explanatory view of a first embodiment of a zinc-bromine battery according to the present invention;

Figure 2 is an explanatory view of a second embodiment of a zinc-bromine battery according to the present invention;

Figure 3 is an explanatory view of a conventional zinc-bromine battery; and

Figures 4 and 5 are characteristic curves of the conventional battery shown in Figure 3.

Preferred embodiments of the present invention will be described with reference to the accompanying drawings. The same numerals are provided for those elements which are the same as those in the conventional device shown in Figure 3, and explanation thereof will be omitted.

First embodiment

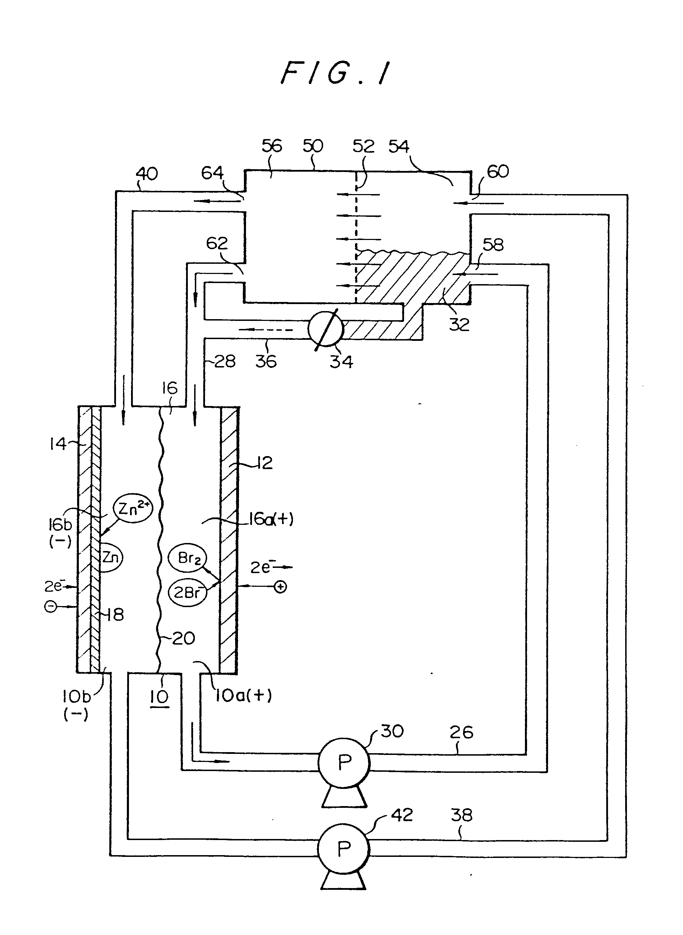

Referring first to Figure 1, a first embodiment of a zinc-bromine battery according to the present invention is shown.

4

Although a conventional zinc-bromine battery has two separate electrolyte storage tanks, namely, a catholyte storage tank and an anolyte storage tank, this embodiment includes only one electrolyte storage tank (50). The electrolyte storage tank (50) is divided into an electrolyte mixing chamber (54) and an electrolyte supply chamber (56) by a perforated membrane (52) provided with a multiplicity of minute holes which allows the electrolyte (16) to permeate therethrough but which impedes the permeation of bromine and its complex compound.

The size of the minute hole which is formed on the perforated membrane (52) is small enough to impede the permeation of bromine and its complex compound. For example, a polyethylene film, a polypropylene film, or a thin film of such kind is preferable as the perforated membrane.

The mixing chamber (54) within the electrolyte storage tank (50) is provided with inlets (58) and (60) for receiving the catholyte (16a) delivered from the cathode reaction tank (10a) and the anolyte (16b) delivered from the anode reaction tank (10b), respectively.

On the other hand, the supply chamber (56) of the electrolyte storage tank (50) is provided with outlets (62) and (64) for supplying the catholyte (16a) and the anolyte (16b) to the cathode reaction tank (10a) and the anode reaction tank (10b), respectively.

Thus, in this embodiment, the catholyte (16a) and the anolyte (16b) which flow from the respective reaction tanks (10a) and (10b) flow into the mixing chamber (54) and are stirred therein. The stirred electrolyte (16) permeates the perforated membrane (52) and flows into the electrolyte supply chamber (56), in which it is separated again into the catholyte (16a) and the anolyte (16b), and the electrolytes (16a) and (16b) are supplied from the outlets (62) and (64) to the cathode reaction tank (10a) and the anode reaction tank (10b), respectively.

The bromine complex compound contained in the electrolyte (16a) which has flowed into the mixing chambers (54) is separated when the electrolyte (16) permeates the perforated membrane (52), and precipitates at the bottom of the mixing chamber (54) as the complex compound chamber (32). Therefore, the electrolyte (16) which flows into the supply chamber (56) includes no complex compound.

A complex compound supply pipe (36) is provided between the complex compound chamber (32) which is situated on the upstream side of the perforated membrane (52) and the pipe (28) which constitutes the passage for the catholyte supplied from the supply chamber (56) to the cathode reaction tank (10a). The complex compound which has precipitated and is stored in the complex compound chamber (32) is mixed into the catholyte (16a) through this supply pipe (36).

Second embodiment

Referring next to Figure 2 which shows a second embodiment of the present invention, the perforated membrane (52) is so arranged that the electrolyte (16) permeates it upwardly from the underside thereof in the electrolyte storage tank (50).

For this purpose, the electrolyte storage chamber (50) in this embodiment is provided with a partition wall (70) at the central portion of the bottom surface. The partition wall (70) substantially divides the tank into two chambers with the upper ends thereof open. The perforated membrane (52) is horizontally disposed between the upper end of the partition wall (70) and the inner wall of the electrolyte storage tank (50), whereby the electrolyte storage tank (50) is divided into the electrolyte mixing chamber (54) and the electrolyte supply chamber (56).

The inlet (58) for the catholyte delivered through the pipe (26) is provided on one side at the lower portion of the side wall of the electrolyte mixing chamber (54), while the inlet (60) for the anolyte delivered through the pipe (38) is provided on one side at the central portion of the side wall thereof.

The result of this arrangement is that the catholyte (16a) and the anolyte (16b) flowing from the inlets (58) and (60), respectively, flow horizontally into the mixing chamber (54) toward the partition wall (70), and after having been adequately stirred, move upwardly, permeate the perforated membrane (52) upwardly from the underside thereof, and flow into the supply chamber (56).

While the electrolyte (16) permeates the perforated membrane (52) upwardly in this way, the bromine complex compound contained in the electrolyte (16) drops under the weight of its own gravity, and is separated by the perforated membrane (52), the separated complex compound approximately precipitating toward the complex compound layer (32). As a result, the electrolyte (16) having an extremely low concentration of bromine complex compound flows into the supply chamber (56).

In order to further lower the concentration of bromine complex compound of the anolyte (16b) which is supplied from the supply chamber (56), a guide wall (72) is provided on the inner top wall of the supply chamber (56) in parallel to and in opposition to the partition wall (70). The guide wall (72) together with the partition wall (70) defines a guide passage (74) for downwardly introducing the electrolyte (16) which contains a small amount of bromine and its complex compound and which has permeated the perforated membrane (52).

The outlet (62) for supplying the electrolyte to the pipe (28) on the cathode side is provided at the bottom of the supply chamber (56) such as to communicate with the guide passage (74).

On the other hand the outlet (64) for supplying the electrolyte to the pipe (40) on the anode side is downwardly provided at the upper portion of the supply chamber (56).

In the zinc-bromine battery according to this embodiment, the bromine complex compound contained in the electrolyte (16) which has flowed into the mixing chamber (54) is considerably separated when the electrolyte (16) permeates the perforated membrane (52).

The small amount of complex compound which has permeated the perforated membrane (52) drops under the weight of its own gravity when the electrolyte (16) flows downwardly through the guide passage (74), and is supplied together with the catholyte (16a) from the outlet (62) to the cathode reaction tank (10a). The remaining complex compound which is still contained in the electrolyte (16) drops under the weight of its own gravity when the electrolyte (16) moves upwardly toward the outlet (64), as is indicated with the arrows in Figure 2, thereby being separated from the electrolyte (16). In this way, it is possible to make the concentration of compound complex contained in the electrolyte which flows out as the anolyte (16b) from the outlet (64) lower than the concentration of complex compound contained in the electrolyte immediately after the permeation through the perforated film (52).

The above described structure of the second embodiment solves the technical problems of the present invention and achieves the aim thereof.

In addition, since the catholyte (16a) and the anolyte (16b) are completely mixed with each other in the electrolyte mixing chamber (54), the complexing agent in the anolyte (16b) which conventionally has hardly been utilized at all can be efficiently utilized in this embodiment. Accordingly it is possible to reduce the amount of complexing agent which needs to be added.

The increase in pH of the electrolyte (16) is caused by $H_2$ gas which is generated when the electrolyzed zinc naturally dissolves into the electrolyte (16), or when self-discharge is generated, mainly on the anode side. The pH of the anode side shows a tendency to increase in comparison with that of the cathode side in the prior art. In this embodiment, however, since the catholyte (16a) and anolyte (16b) are completely mixed, the rise in pH of the anolyte (16b) is controlled.

**Claims**

1. Zinc-bromine battery wherein a catholyte (16a) and an anolyte (16b) are circulated between

a cathode reaction tank (10a) and an anode reaction tank (10b) which are separated by each other by a separator membrane for preventing self-discharge, and

an electrolyte storage tank (50) for storing an electrolyte with a bromine complexing agent added thereto, said electrolyte storage tank (50) including an electrolyte mixing chamber (54), to which said anolyte (16b) and catholyte (16a) flow and an electrolyte supply chamber (56) for resupplying the mixed electrolyte as said anolyte (16b) and said catholyte (16a),

characterized in that said electrolyte mixing chamber (54) and said electrolyte supply chamber (56) provided within said electrolyte storage tank (50) are separated by a perforated membrane (52) provided with a multiplicity of minute holes which allows electrolyte to permeate therethrough but which impedes the permeation of bromine complex compound, and

in that a complex compound supply pipe (36) is provided between the bottom of said electrolyte mixing chamber (54) which is to constitute a complex compound storage chamber (32) and a passage (62, 28) for said catholyte (16a) which is supplied from said electrolyte supply chamber (56) to said cathode reaction tank (10a), whereby said complex compound is supplied only to said cathode reaction tank (10a).

2. A zinc-bromine battery according to Claim 1, wherein said perforated membrane (52) is provided in said electrolyte storage tank (50) such that said electrolyte permeates horizontally through said perforated membrane (52).

3. A zinc-bromine battery according to Claims 1 and 2, wherein said perforated membrane (52) is formed of a polyethylene or polypropylene film.

4. A zinc-bromine battery according to Claim 1, wherein said perforated membrane (52) is provided in said electrolyte storage tank (50) such that said electrolyte permeates through said perforated membrane (52) upwardly from the underside of said membrane.

5. A zinc-bromine battery according to Claim 4, wherein a partition wall (70) for dividing said electrolyte storage tank (50) into an electrolyte mixing chamber (54) and an electrolyte supply chamber (56) with the upper portions thereof open is erected at the central portion of the bottom of said electrolyte storage tank (50) and said perforated membrane (52) is horizontally provided between the upper end of said partition wall (70) and the inner wall of said electrolyte storage tank (50).

6. A zinc-bromine battery according to Claim 4, wherein an inlet (58) for said catholyte (16a) flowing from the pipes (26) on the cathode side is provided at the lower portion of the side surface of said electrolyte mixing chamber (54), and an inlet (60) for said anolyte (16b) flowing from the pipes (38) on the anode side is provided at the central portion of said side surface of said electrolyte mixing chamber (54).

7. A zinc-bromine battery according to Claim 4, wherein said electrolyte supply chamber (56) includes:

a guide wall (72) which is provided on the inner top of said electrolyte supply chamber (56) vertically and in parallel to said partition wall (70) such that said guide wall (72) together with said partition wall (70) defines a guide passage (74) for downwardly introducing the electrolyte which has passed through said perforated membrane (52);

an outlet (62) which is provided on the bottom surface of said electrolyte supply chamber (56) such as to communicate with said guide passage (74) and for the purpose of supplying said catholyte (16a) to pipes (28) on the cathode side; and

an outlet (64) which is provided at the upper portion of said electrolyte supply chamber (56) for the purpose of supplying said anolyte (16b) to said pipes (40) on the anode side.

**Patentansprüche**

1. Zink-Brom-Batterie, bei der ein Katholyt (16a) und ein Anolyt (16b) zwischen

einem Kathodenreaktionsbehälter (10a) und einem Anodenreaktionsbehälter (10b), die durch eine Separatormembran voneinander getrennt sind, um eine Selbstentladung zu verhindern, und

einem Elektrolytvorratsbehälter (50), der zum Aufbewahren eines Elektrolyten mit einem dazugegebenen Bromkomplexbildner dient, im Kreislauf geführt werden, wobei der Elektrolytvorratsbehälter (50) eine Elektrolytmischkammer (54), zu der der Anolyt (16b) und der Katholyt (16a) strömen, und eine Elektrolytzuführungskammer (56), die dazu dient, den vermischten Elektrolyten erneut als Anolyt (16b) und als Katholyt (16a) zuzuführen, aufweist,

dadurch gekennzeichnet, daß die Elektrolytmischkammer (54) und die Elektrolytzuführungskammer (56), die innerhalb des Elektrolytvorratsbehälters (50) vorgesehen sind, durch eine gelochte Membran (52), die mit einer Vielzahl kleiner Löcher versehen ist und das Hindurchdringen des Elektrolyten erlaubt, jedoch das Hindurchdringen einer Bromkomplexverbindung verhindert, getrennt sind und

daß zwischen dem Boden der Elektrolytmischkammer (54), der zur Bildung einer Komplexverbindungs-Vorratskammer (32) dient, und einem Durchgang (62, 28) für den Katholyten (16a), der von der Elektrolytzuführungskammer (56) dem Kathodenreaktionsbehälter (10a) zugeführt wird, ein Komplexverbindungs-Zuführungsrohr (36) vorgesehen ist, wodurch die Komplexverbindung nur dem Kathodenreaktionsbehälter (10a) zugeführt wird.

2. Zink-Brom-Batterie nach Anspruch 1, bei der die gelochte Membran (52) derart in dem Elektrolytvorratsbehälter (50) vorgesehen ist, daß der Elektrolyt waagerecht durch die gelochte Membran (52) hindurchdringt.

3. Zink-Brom-Batterie nach Anspruch 1 und 2, bei der die gelochte Membran (52) aus einer Polyethylen- oder Polypropylenfolie gebildet ist.

4. Zink-Brom-Batterie nach Anspruch 1, bei der die gelochte Membran (52) derart in dem Elektrolytvorratsbehälter (50) vorgesehen ist, daß der Elektrolyt durch die gelochte Membran (52) nach oben von der Unterseite der Membran her hindurchdringt.

5. Zink-Brom-Batterie nach Anspruch 4, bei der im mittleren Teil des Bodens des Elektrolytvorratsbehälters (50) eine Trennwand (70) zum Aufteilen des Elektrolytvorratsbehälters (50) in eine Elektrolytmischkammer (54) und eine Elektrolytzuführungskammer (56), deren Oberteile offen sind, aufgestellt ist und die gelochte Membran (52) waagerecht zwischen dem oberen Ende der Trennwand (70) und der Innenwand des Elektrolytvorratsbehälters (50) vorgesehen ist.

6. Zink-Brom-Batterie nach Anspruch 4, bei der im unteren Teil der Seitenfläche der Elektrolytmischkammer (54) ein Einlaß (58) für den Katholyten (16a), der aus den Rohren (26) an der Kathodenseite strömt, vorgesehen ist und im mittleren Teil der Seitenfläche der Elektrolytmischkammer (54) ein Einlaß (60) für den Anolyten (16b), der aus den Rohren (38) an der Anodenseite strömt, vorgesehen ist.

7. Zink-Brom-Batterie nach Anspruch 4, bei der die Elektrolytzuführungskammer (56)

eine Leitwand (72), die an der inneren Oberseite der Elektrolytzuführungskammer (56) senkrecht und parallel zu Trennwand (70) derart vorgsehen ist, daß die Leitwand (72) zusammen mit der Trennwand (70) einen Leitkanal (74) abgrenzt, der dazu dient, den Elektrolyten, der durch die gelochte Membran (52) hindurchgegangen ist, nach unten einzuführen,

einen Auslaß (62) für die Zuführung des Katholyten (16a) zu Rohren (28) an der Kathodenseite, der an der Bodenfläche der Elektrolytzuführungskammer (56) derart vorgesehen ist, daß er mit dem Leitkanal (74) in Verbindung steht, und

einen Auslaß (64) für die Zuführung des Anolyten (16b) zu Rohren (40) an der Anodenseite, der am Oberteil der Elektrolytzuführungskammer (56) vorgesehen ist, aufweist.

**Revendications**

1. Une batterie zinc-brome dans laquelle on fait circuler un électrolyte cathodique (16a) et un électrolyte (16b) anodique entre:

—un réservoir (10a) de réaction cathodique et un réservoir (10b) de réaction anodique qui sont séparés l'un de l'autre par une membrane de séparation destinée à empêcher une autodécharge;

—un réservoir (50) de stockage d'électrolyte destiné à stocker un électrolyte additionné d'un agent complexant du brome, ce réservoir de stockage d'électrolyte (50) comprenant une chambre (54) de mélange d'électrolyte dans laquelle cet électrolyte anodique (16b) et cet électrolyte cathodique (16a) sont amenés, et une chambre d'alimentation en électrolyte (56) permettant que le mélange d'électrolyte soit recirculé sous forme de cet électrolyte anodique (16b) et de cet électrolyte cathodique (16a),

caractérisée en ce que cette chambre (54) de mélange d'électrolyte et cette chambre (56) d'alimentation en électrolyte disposée au sein de ce réservoir (50) de stockage d'électrolyte sont séparées par une membrane perforée (52) dans laquelle on a pratiqué une multiplicité de trous minuscules autorisant la perméation de l'électrolyte à travers celle-ci mais empêchant la perméation du dérivé complexe du brome et en ce qu'un tuyau (36) d'alimentation en dérivé complexe est disposé entre le fond de cette chambre (54) de mélange d'électrolyte qui permet de constituer une réservoir (32) de stockage de dérivé complexe et un passage (62, 28) pour cet électrolyte cathodique (16a) que l'on amène par cette chambre (56) d'alimentation en électrolyte dans ce réservoir (10a) de réaction cathodique, ce dérivé complexe étant alors introduit seulement dans ce réservoir (10a) de réaction cathodique.

2. Une batterie zinc-brome selon la revendication 1, caractérisée en ce que cette membrane perforée (52) est disposée dans le réservoir de stockage (50) de l'électrolyte de façon à ce que cet électrolyte traverse horizontalement par perméation cette membrane perforée (52).

3. Une batterie zinc-brome selon la revendication 1 et 2, caractérisée en ce que cette membrane perforée (52) est formée d'un film de polyéthylène ou d'un film de polypropylène.

4. Une batterie zinc-brome selon la revendication 1, caractérisée en ce que cette membrane perforée (52) est disposée dans ce réservoir (50) de stockage d'électrolyte de façon à ce que cet électrolyte monte par perméation à travers cette membrane (52) à partir de la face inférieure de cette membrane.

5. Une batterie zinc-brome selon la revendication 4, caractérisée en ce qu'une cloison de séparation (70) destinée à séparer ce réservoir (50) de stockage de l'électrolyte en une chambre (54) de mélange de l'électrolyte et en une chambre (56) de fourniture des électrolytes dont les parties supérieures sont ouvertes, est disposée verticalement au niveau de la partie centrale du fond de ce réservoir (50) de stockage de l'électrolyte et cette membrane perforée (52) est disposée horizontalement entre l'extrémité supérieure de cette cloison de séparation (70) et la paroi intérieure de ce réservoir (50) de stockage de l'électrolyte.

6. Une batterie zinc-brome selon la revendication 4, caractérisée en ce qu'un orifice d'entrée (58) pour cet électrolyte cathodique (16a) amené par le tuyau (26) du côté de la cathode est disposé à la partie inférieure de la surface latérale de cette chambre (54) de mélange des électrolytes et un orifice d'entrée (60) pour cet électrolyte anodique (16b) amené par le tuyau (38) du côté de l'anode est disposé à la partie centrale du cette surface latérale de cette chambre (54) de mélange des électrolytes.

7. Une batterie zinc-brome selon la revendication 4, caractérisée en ce que cette chambre (56) de fourniture d'électrolyte comprend:

—qne paroi déflectrice (72) disposée au sommet à l'intérieur de cette chambre (56) de fourniture d'électrolyte disposée verticalement et parallèlement à cette cloison de séparation (70) de façon à ce que cette paroi déflectrice en même temps que cette cloison de séparation (70) définissent un passage de guide (74) pour que l'électrolyte qui est passé à travers cette membrane perforée (52), circule vers le bas;

—un orifice de sortie (62) disposé sur la surface de fond de cette chambre (56) de fourniture d'électrolyte de façon à communiquer avec ce passage de guidage (74) et afin de faire passer cet électrolyte cathodique (16a) dans le tuyau (28) du côté cathodique; et

—un orifice de sortie (64) disposé à la partie supérieure de cette chambre (56) d'alimentation en électrolyte afin de faire passer cet électrolyte anodique (16b) dans le tuyau (40) du côté anodique.

# FIG. 1

# FIG. 2

# FIG. 3

# FIG. 4

FIG. 5